# EUROPÄISCHE PATENTANMELDUNG

(11) **EP 3 967 487 A1**
(43) Veröffentlichungstag der Anmeldung: **16.03.2022**
(21) Anmeldenummer: 20195642.2
(22) Anmeldetag: 11.09.2020
(51) Int. Cl.: B32B 13/02, B32B 13/06, B32B 15/20

(54) **SCHICHTENVERBUND**

(71) Anmelder: Heraeus Deutschland GmbH & Co. KG, 63450 Hanau (DE)
(72) Erfinder: SCHEIBEL, Markus, 63450 Hanau (DE); MIRIC, Anton-Zoran, 63450 Hanau (DE); DRASKOVIC, Tamara, 63450 Hanau (DE)
(74) Vertreter: Heraeus IP

(57) **Zusammenfassung**

Schichtenverbund umfassend zwei nach außen weisende Metallschichten mit einer dazwischen befindlichen alternierenden Schichtenabfolge aus n Schichten aus einer hydraulisch gehärteten anorganischen Zementzusammensetzung und n - 1 Metallschichten mit n = 1, 2 oder 3.

## Beschreibung

Die Erfindung betrifft einen Schichtenverbund umfassend zwei nach außen weisende Metallschichten und mindestens eine Zwischenschicht aus einer hydraulisch gehärteten anorganischen Zementzusammensetzung, Verfahren zu seiner Herstellung und seine Verwendung.

Der hierin verwendete Begriff "hydraulisches Härten" bedeutet Abbinden in Gegenwart von Wasser respektive nach Zusatz von Wasser.

Im Elektronikbereich als Schaltungsträger verwendbare Substrate sind bekannt. Beispiele für solche Substrate umfassen Leadframes, PCBs (printed circuit boards, gedruckte Leiterplatten), Keramiksubstrate, Metallkeramiksubstrate wie beispielsweise DCB (direct copper bonded), AMB (active metal brazed), IMS (isolierte Metallsubstrate) und dergleichen.

Die vorliegende Erfindung besteht in der Bereitstellung eines neuen Substrattyps, der in seiner grundsätzlichen Konzeption am ehesten mit einem Metallkeramiksubstrat verglichen werden kann.

Bei dem neuen erfindungsgemäßen Substrattyp handelt es sich um einen Schichtenverbund umfassend oder bestehend aus zwei nach außen weisenden Metallschichten mit einer dazwischen befindlichen alternierenden Schichtenabfolge aus n Schichten aus einer hydraulisch gehärteten anorganischen Zementzusammensetzung und n-1 Metallschichten, wobei n = 1 (Schichtenverbund vom Typ I), 2 (Schichtenverbund vom Typ II), oder 3 (Schichtenverbund vom Typ III) bedeutet.

Die Schichtenabfolge beim Schichtenverbund vom bevorzugten Typ I lautet: "Äußere Metallschicht / Schicht bzw. Zwischenschicht aus einer hydraulisch gehärteten anorganischen Zementzusammensetzung / Äußere Metallschicht".

Die Schichtenabfolge beim Schichtenverbund vom Typ II lautet: "Äußere Metallschicht / Schicht aus einer hydraulisch gehärteten anorganischen Zementzusammensetzung / Metallschicht / Schicht aus einer hydraulisch gehärteten anorganischen Zementzusammensetzung / Äußere Metallschicht".

Die Schichtenabfolge beim Schichtenverbund vom Typ III lautet: "Äußere Metallschicht / Schicht aus einer hydraulisch gehärteten anorganischen Zementzusammensetzung / Metallschicht / Schicht aus einer hydraulisch gehärteten anorganischen Zementzusammensetzung / Metallschicht / Schicht aus einer hydraulisch gehärteten anorganischen Zementzusammensetzung / Äußere Metallschicht".

Hierin wird unterschieden zwischen hydraulisch härtbarem anorganischen Zement, wässriger hydraulisch härtbarer anorganischer Zementzubereitung und hydraulisch gehärteter anorganischer Zementzusammensetzung. Aus hydraulisch härtbarem anorganischem Zement, welcher in Pulverform vorliegt, kann durch Vermischen mit Wasser eine wässrige hydraulisch härtbare anorganische Zementzubereitung insbesondere in Form einer viskoelastischen, beispielsweise pastösen oder fließfähigen Masse hergestellt werden, auch als "Zementleim (englisch: cement paste oder cement glue)" bezeichnet. Eine wässrige hydraulisch härtbare anorganische Zementzubereitung wiederum kann hydraulisch zu einer hydraulisch gehärteten anorganischen Zementzusammensetzung in Form eines harten Festkörpers aushärten, auch als "Zementstein (englisch: cement stone)" bezeichnet. Eine derartige hydraulisch gehärtete anorganische Zementzusammensetzung ist praktisch wasserunlöslich, d.h. im Wesentlichen oder vollständig wasserunlöslich.

Der erfindungsgemäße Schichtenverbund ist im Wesentlichen oder vollständig eben. "Im Wesentlichen eben" bedeutet, dass der erfindungsgemäße Schichtenverbund eine tolerierbare und an sich ungewollte Wölbung (englisch: "warpage"), beispielsweise von nicht mehr als bis zu 1000 µm aufweisen kann. Eine solche Wölbung kann aufgrund unterschiedlichen thermischen Ausdehnungsverhaltens der verschiedenen Schichten auftreten.

Die weitere Beschreibung erfolgt, soweit nicht ausdrücklich anders bemerkt, am Beispiel der bevorzugten Ausführungsform des erfindungsgemäßen Schichtenverbundes vom Typ I. Für die erfindungsgemäßen Schichtenverbunde vom Typ II oder III gilt Analoges sowohl im Hinblick auf die Schichtenverbunde als solche als auch bezüglich deren Herstellungsweise und Verwendung.

Der erfindungsgemäße Schichtenverbund vom Typ I liegt vor in Gestalt einer Sandwichanordnung mit den beiden einander parallel gegenüber angeordneten und durch die Schicht aus der hydraulisch gehärteten anorganischen Zementzusammensetzung voneinander getrennten Metallschichten.

Bei Betrachtung des erfindungsgemäßen in horizontaler Lage befindlichen Schichtenverbundes vom Typ I bildet eine der beiden Metallschichten die Oberseite des Schichtenverbundes und die andere die Unterseite. Um Missverständnisse auszuschließen, mit Blick auf eine mögliche Verwendung als Substrat in der Elektronik wird die Oberseite als die zum Tragen der eigentlichen elektronischen Schaltung gedachte Seite verstanden (die Seite, auf der die elektronischen Bauteile befestigt werden); die Unterseite hingegen dient der Abfuhr von infolge Verlustleistung während des Betriebs der elektronischen Schaltung entstehender Wärme und bleibt dieser Funktion auch vorbehalten; beispielsweise kann sie dazu mit einem im Elektronikbereich üblichen Kühlkörper oder mit einer Bodenplatte stoffschlüssig (beispielsweise durch eine Wärmeleitklebe-, Sinter- oder Lötverbindung) verbunden werden. Es ist auch möglich, die Metallschicht der Unterseite direkt als Kühlkörper auszubilden respektive durch einen solchen zu ersetzen.

Die innenliegenden Metallschichten der bei den Schichtenverbunden vom Typ II und III zu findenden alternierenden Schichtenabfolge können bei elektrischer Verbindung mit der oberseitigen Metallschicht einer elektrische Verluste minimierenden Stromleitung dienen. Elektrische Verbindungen zwischen Metallschichten können mittels nachstehend noch erwähnter elektrisch leitfähiger Spacer (auch Via genannt) realisiert werden.

Die Gesamtdicke des erfindungsgemäßen Schichtenverbundes vom Typ I wird gebildet aus der Summe der Einzelschichtdicken der beiden Metallschichten und der Dicke der Schicht aus der hydraulisch gehärteten anorganischen Zementzusammensetzung sowie, falls vorhanden, der Schichtdickenbeiträge einer oder mehrerer weiterer optionaler Schichten; bei erfindungsgemäßen Schichtenverbunden vom Typ II oder III kommen Schichtdickenbeiträge innenliegender Metallschichten und entsprechender hydraulisch gehärteter anorganischer Zementzusammensetzungsschichten hinzu. Optionale Schichten sind verschieden von Metallschichten und auch von Schichten aus hydraulisch gehärteter anorganischer Zementzusammensetzung. Die Schichtdicke der die Oberseite bildenden Metallschicht liegt wie auch die innenliegender Metallschichten beispielsweise im Bereich von 100 bis 1500 µm, während die Schichtdicke der die Unterseite bildenden Metallschicht beispielsweise im Bereich von 100 bis 1500 µm oder gegebenenfalls sogar höher liegt, beispielsweise bis zu 5000 µm betragen kann. Die Schichtdicken der Metallschichten können alle gleich, teilweise gleich oder alle verschieden voneinander sein. Besonders hohe Schichtdicken der Unterseite können dann auftreten, wenn die Unterseite selber eine Bodenplatte bildet. Die Schichtdicke von hydraulisch gehärteten anorganischen Zementzusammensetzungsschichten liegt jeweils beispielsweise im Bereich von 50 bis 1000 µm. Die Metallschichten können jeweils, wie im weiteren Verlauf noch erläutert wird, aus üblichen Metallfolien gebildet werden. Mit anderen Worten, die Dicke der Metallschichten entspricht der solcher Metallfolien.

Wie später noch erläutert wird, kann ein erfindungsgemäßer Schichtenverbund mittels eines kontinuierlichen oder diskontinuierlichen Verfahrens hergestellt werden. Das Format (Umriss und Flächenmaß) eines diskontinuierlich hergestellten erfindungsgemäßen Schichtenverbundes kann in weiten Bereichen variieren. Das Flächenmaß liegt im Allgemeinen im Bereich von 2 bis 700 cm². Im Allgemeinen handelt es sich um Schichtenverbunde in Rechteckform, beispielsweise im Format 1 cm mal 2 cm bis 14 cm mal 50 cm.

Bei einem direkt als Substrat im Elektronikbereich verwendbaren erfindungsgemäßen Schichtenverbund liegt das Flächenmaß eher im unteren des beispielhaft genannten Wertebereichs; es kann beispielsweise im Bereich von 2 bis 100 cm² liegen, bevorzugt in Rechteckform.

Der erfindungsgemäße Schichtenverbund kann aber auch als großflächige Quelle für eine Vielzahl von kleinflächigen direkt als Substrat im Elektronikbereich verwendbaren erfindungsgemäßen Schichtenverbunden ausgestaltet sein, beispielsweise vergleichbar einer aus dem Bereich der Metallkeramiksubstrate bekannten in mehrere kleinere Substrate gewünschten Formats zerteilbaren Mastercard. Das Flächenmaß liegt dann eher im oberen Bereich des vorerwähnten Wertebereichs.

Die Ränder der Metallschichten ragen nicht über die Ränder der Schicht oder Schichten aus hydraulisch gehärteter anorganischer Zementzusammensetzung hinaus; sie schließen entweder gemeinsam damit ab oder die Schicht(en) aus hydraulisch gehärteter anorganischer Zementzusammensetzung hat/haben eine geringfügig größere Flächenausdehnung als die Metallschichten und liegt/liegen dann in ihrem gesamten Randbereich unbedeckt von den Metallschichten vor, dergestalt dass ein geringer beispielsweise 0,2 bis 3 mm schmaler Überstand hydraulisch gehärteter anorganischer Zementzusammensetzung ohne Metallschichtbedeckung vorliegt. Die Metallschichten können eine Randabschwächung ihrer Ränder aufweisen, d.h. sie können im Randbereich eine nach außen verlaufende Schichtdickenabschwächung haben. Die Metallschichten sind im Allgemeinen deckungsgleich angeordnet, d.h. gleichformatig und nicht gegeneinander verschoben.

Die Metallschichten können aus dem gleichen oder aus verschiedenen Metallen bestehen. Als Beispiele für geeignete Metalle sind insbesondere Kupfer und Kupferlegierungen, Molybdän und Molybdänlegierungen sowie Aluminium und Aluminiumlegierungen zu nennen. Kupferlegierungen, Molybdänlegierungen und Aluminiumlegierungen umfassen im Allgemeinen mindestens 90 Gewichts-% Kupfer, mindestens 90 Gewichts-% Molybdän bzw. mindestens 90 Gewichts-% Aluminium.

Die Zwischenschicht des erfindungsgemäßen Schichtenverbundes vom Typ I bzw. die Schichten zwischen den Metallschichten der erfindungsgemäßen Schichtenverbunde vom Typ II und III bestehen aus hydraulisch gehärteter anorganischer Zementzusammensetzung. Im Falle der erfindungsgemäßen Schichtenverbunde vom Typ II und III mit ihren zwei bzw. drei hydraulisch gehärteten anorganischen Zementzusammensetzungsschichten können letztere aus jeweils den gleichen oder aus voneinander verschiedenen hydraulisch gehärteten anorganischen Zementzusammensetzungen bestehen.

Die hydraulisch gehärtete(n) anorganische(n) Zementzusammensetzung(en) kann/können aus einem hydraulisch gehärteten anorganischen Zement bestehen oder neben dem eigentlichen hydraulisch gehärteten anorganischen Zement, d.h. neben dem eine Matrix bildenden hydraulisch gehärteten anorganischen Zement, einen oder mehrere weitere Bestandteile umfassen, beispielsweise in einem Gesamtmengenanteil von 0,5 bis 98 Gew.-%. In beiden Fällen kann die hydraulisch gehärtete anorganische Zementzusammensetzung insbesondere gebildet werden durch Vermischen von hydraulisch härtbarem anorganischem Zement plus gegebenenfalls dem mindestens einen weiteren Bestandteil mit Wasser zu einer wässrigen hydraulisch härtbaren anorganischen Zementzubereitung, Applikation derselben, gefolgt von deren hydraulischer Härtung (d.h. dem Abbinden) und Trocknung.

Die wässrige hydraulisch härtbare anorganische Zementzubereitung kann einen Wasseranteil von beispielsweise 6 bis 25 Gew.-% aufweisen.

Die Viskosität einer frisch hergestellten (innerhalb von 5 Minuten nach Fertigstellung) wässrigen hydraulisch härtbaren anorganischen Zementzubereitung kann beispielsweise im Bereich von 0,5 bis 20 Pa·s (bei Bestimmung mittels Rotationsviskosimetrie, Platte-Platte-Messprinzip, Plattendurchmesser 25 mm, Messspalt 1 mm, Probentemperatur 20°C) liegen.

Umfasst die hydraulisch gehärtete anorganische Zementzusammensetzung neben dem eigentlichen hydraulisch gehärteten anorganischen Zement einen oder mehrere weitere Bestandteile, so umfasst die wässrige hydraulisch härtbare anorganische Zementzubereitung neben dem eigentlichen hydraulisch härtbaren anorganischen Zement und Wasser auch einen oder mehrere weitere Bestandteile, insbesondere den oder die gleichen Bestandteile. Solche weiteren Bestandteile können schon dem hydraulisch härtbaren anorganischen Zement beigegeben respektive zugemischt werden. Es ist auch möglich, zunächst den hydraulisch härtbaren anorganischen Zement mit allen der weiteren Bestandteile ohne Wasserzusatz und danach mit Wasser zur wässrigen hydraulisch härtbaren anorganischem Zementzubereitung zu vermischen. Es kann aber auch so gearbeitet werden, dass der oder die weiteren Bestandteile separat vor, während und/oder nach dem Wasserzusatz zugegeben werden. Mengenanteil, Zugabezeitpunkt bzw. Zugabereihenfolge richten sich nach den betreffenden chemischen und physikalischen Eigenschaften während der Herstellung der wässrigen hydraulisch härtbaren anorganischen Zementzubereitung im Hinblick auf deren Homogenität und Handhabbarkeit; aus praktischer Sicht wird sich der Fachmann hier insbesondere am Mischverhalten und am Verarbeitungsverhalten, beispielsweise der sogenannten Topfzeit (englisch: pot life) orientieren.

Der oder die vorerwähnten weiteren Bestandteile können in einem Gesamtmengenanteil von beispielsweise 0,1 bis 92 Gew.-%, bezogen auf wässrige hydraulisch härtbare anorganische Zementzubereitung, umfasst sein.

Der hydraulisch härtbare anorganische Zement als solcher ist ein schüttfähiges Pulver. Es kann sich beispielsweise um einen dem Fachmann bekannten Portlandzement, Tonerdezement, Magnesiumoxidzement, Phosphatzement, beispielsweise Zinkphosphatzement oder bevorzugt Magnesiumphosphatzement handeln.

Die im hydraulisch härtbaren anorganischen Zement enthaltenen Partikel als auch Partikelform aufweisende etwaige weitere Bestandteile haben Teilchengrößen unterhalb der Schichtdicke der hydraulisch gehärteten anorganischen Zementzusammensetzung.

Beispiele für vorerwähnte weitere Bestandteile umfassen Füllstoffe, Fasern, Fließverbesserer, Abbindeverzögerer (Topfzeitverlängerer), Entschäumer, wassermischbare organische Lösemittel, Hydrophobisierungsmittel, Oberflächenspannung beeinflussende Additive, Benetzungsmittel und Haftvermittler.

Beispiele für Füllstoffe umfassen Glas; Calciumsulfat; Bariumsulfat; einfache und komplexe Silikate umfassend Natrium, Kalium, Calcium, Aluminium, Magnesium, Eisen und/oder Zirkonium; einfache und komplexe Aluminate umfassend Calcium, Magnesium und/oder Zirkonium; einfache und komplexe Titanate umfassend Calcium, Aluminium, Magnesium, Barium und/oder Zirkonium; einfache und komplexe Zirkonate umfassend Calcium, Aluminium und/oder Magnesium; Zirkoniumdioxid; Titandioxid; Aluminiumoxid; Siliziumdioxid, insbesondere in Form von Kieselsäure und Quarz; Siliziumcarbid; Aluminiumnitrid; Bornitrid und Siliziumnitrid. Hierin wird zwischen einfachen und komplexen Silikaten, Aluminaten, Titanaten und Zirkonaten unterschieden. Bei den komplexen Vertretern handelt es sich nicht etwa um Komplexverbindungen, vielmehr sind damit Silikate, Aluminate, Titanate und Zirkonate gemeint mit mehr als einer Art von Kationen, wie beispielsweise Natriumaluminiumsilikat, Calciumaluminiumsilikat, Bleizirkontitanat usw. Die Anwesenheit solcher Füllstoffe kann sich günstig auf die Wärmeleitfähigkeit und/oder das Wärmeausdehnungsverhalten der hydraulisch gehärteten anorganischen Zementzusammensetzung auswirken.

Beispiele für Fasern umfassen Glasfasern, Basaltfasern, Borfasern und keramische Fasern, beispielsweise Siliziumkarbidfasern und Aluminiumoxidfasern, Steinwollfasern, Wollastonitfasern und Aramidfasern. Die Anwesenheit von Fasern kann sich günstig auf die Zugspannungsfestigkeit und Temperaturwechselfestigkeit der hydraulisch gehärteten anorganischen Zementzusammensetzung auswirken.
Der erfindungsgemäße Schichtenverbund vom Typ I kann hergestellt werden durch Applikation der vorerwähnten wässrigen hydraulisch härtbaren anorganischen Zementzubereitung in homogener Schichtdicke zwischen zwei Metallfolien, gefolgt von hydraulischem Härten und Trocknen der applizierten wässrigen hydraulisch härtbaren anorganischen Zementzubereitung. Ganz analog können die erfindungsgemäßen Schichtenverbunde vom Typ II und III hergestellt werden durch Applikation jeweils gleicher oder verschiedener wässriger hydraulisch härtbarer anorganischer Zementzubereitungen in jeweils homogener Schichtdicke zwischen drei respektive vier Metallfolien, gefolgt von hydraulischem Härten und Trocknen der applizierten wässrigen hydraulisch härtbaren anorganischen Zementzubereitung. Die Erfindung betrifft insofern auch Herstellungsverfahren für die erfindungsgemäßen Schichtenverbunde. Mögliche Herstellungsverfahren können kontinuierlich oder diskontinuierlich ausgestaltet sein. Verschiedene Applikationsverfahren sind möglich, beispielsweise Drucken, Rakeln, Aufsprühen, Dispensen, Aufpinseln oder Vergießen, letzteres mit oder ohne Vakuumunterstützung. Das hydraulische Härten bzw. das Abbinden kann bei Umgebungsbedingungen, beispielsweise bei einer Umgebungstemperatur im Bereich von 20 bis 25 °C stattfinden und dabei beispielsweise eine Dauer von 1 Minute bis 6 Stunden benötigen. Soll die Abbindedauer verkürzt werden, kann bei erhöhter Temperatur gearbeitet werden, beispielsweise kann das Abbinden bei 30 bis unter 100 °C Objekttemperatur stattfinden und es ist dann schon beispielsweise innerhalb weniger Sekunden bis 1 Stunde beendet. Das der Entwässerung dienende Trocknen schließt sich ans Abbinden an und benötigt beispielsweise 0,5 bis 6 Stunden bei 80 bis 600 °C Objekttemperatur, wobei es zweckmäßig sein kann, mehrere Temperaturstufen zu durchlaufen. Das Trocknen kann vakuumunterstützt erfolgen.

In einer als diskontinuierliches Verfahren ausgestalteten Ausführungsform kann das Herstellungsverfahren für einen erfindungsgemäßen Schichtenverbund vom Typ I die Schritte umfassen:
(1) Bereitstellen einer das Format des erfindungsgemäßen Schichtenverbundes bestimmenden Form und einer wie vorerwähnt hergestellten wässrigen hydraulisch härtbaren anorganischen Zementzubereitung,
(2) Vorlegen einer Metallfolie in die Form,
(3) Applizieren der wässrigen hydraulisch härtbaren anorganischen Zementzubereitung auf die vorgelegte Metallfolie,
(4) Aufbringen einer weiteren Metallfolie auf die applizierte wässrige hydraulisch härtbare anorganische Zementzubereitung, und
(5) hydraulisches Härten und Trocknen der wässrigen hydraulisch härtbaren anorganischen Zementzubereitung,
wobei die Schritte (2) bis (4) so durchgeführt werden, dass ein Schichtenverbund umfassend die nach außen weisenden Metallfolien mit einer dazwischen befindlichen Schicht aus der wässrigen hydraulisch härtbaren anorganischen Zementzubereitung gebildet wird. Das entsprechende diskontinuierliche Herstellungsverfahren für einen erfindungsgemäßen Schichtenverbund vom Typ II oder III ist analog, wobei die Schritte (3) und (4) dementsprechend wiederholt werden.

In Schritt (1) wird eine das Format des erfindungsgemäßen Schichtenverbundes bestimmende Form bereitgestellt. Die Form erlaubt eine Aufnahme der in den Schritten (2) und (4) aufzunehmenden Metallfolien sowie der in Schritt (3) zwischen den Metallfolien aufzunehmenden wässrigen hydraulisch härtbaren anorganischen Zementzubereitung. Ferner wird in Schritt (1) die in Schritt (2) zu applizierende wässrige hydraulisch härtbare anorganische Zementzubereitung bereitgestellt. Deren Herstellung kann erfolgen wie vorerwähnt.

In Schritt (2) wird eine Metallfolie in die in Schritt (1) bereitgestellte Form vorgelegt.

Zwischen Schritt (2) und Schritt (3) können Spacer appliziert werden. Die Spacer können besonders wärmeleitfähig sein. Die Spacer können helfen den Abstand zwischen den Metallschichten respektive die Schichtdicke der Zwischenschicht aus wässriger hydraulisch härtbarer anorganischer Zementzubereitung bzw. der daraus entstehenden hydraulisch gehärteten anorganischen Zementzusammensetzung zu definieren. Die Spacer können auch als besonders effektive Wärmeleitpfade von der ober- zur unterseitigen Metallschicht innerhalb der Zwischenschicht fungieren. Bei einem erfindungsgemäßen Schichtenverbund vom Typ II oder III können Spacer elektrisch leitfähig sein.

In Schritt (3) wird die in Schritt (1) bereitgestellte wässrige hydraulisch härtbare anorganische Zementzubereitung auf die in der Form vorgelegte Metallfolie appliziert. Verschiedene Applikationsverfahren sind möglich, beispielsweise Drucken, Rakeln, Aufsprühen, Dispensen, Aufpinseln oder Vergießen, letzteres mit oder ohne Vakuumunterstützung. Die zur Applikation gelangende Menge richtet sich nach der gewünschten Schichtdicke der auszubildenden Zwischenschicht aus der hydraulisch gehärteten anorganischen Zementzusammensetzung. Der Fachmann versteht es, während der Ausführung von Schritt (3) ein mögliches Volumenänderungs-, beispielsweise Volumenschrumpfverhalten des Materials während Schritt (5) zu berücksichtigen, mit anderen Worten, er wird die Nassschichtdicke dementsprechend wählen.

In Schritt (4) wird die zweite Metallfolie auf die applizierte wässrige hydraulisch härtbare anorganische Zementzubereitung aufgebracht respektive aufgelegt. Es kann zweckmäßig sein bei der Durchführung von Schritt (4) unterstützende Maßnahmen zu treffen, wie beispielsweise Einwirkung von Vibration, Ultraschall oder Presskraft, beispielsweise mittels eines Stempels oder eines Gewichts.

Die Schritte (2) bis (4) werden so durchgeführt, dass ein Schichtenverbund umfassend die nach außen weisenden Metallfolien mit einer dazwischen befindlichen Schicht aus der wässrigen hydraulisch härtbaren anorganischen Zementzubereitung gebildet wird. Es ist zweckmäßig dabei darauf zu achten, dass die Metallfolien eben sind und diesbezüglich auch nicht willentlich verändert oder beschädigt werden.

In Schritt (5) wird die zwischen den Metallfolien befindliche wässrige hydraulisch härtbare anorganische Zementzubereitung hydraulisch gehärtet und getrocknet. Dabei entsteht ein erfindungsgemäßer Schichtenverbund. Zumindest das Abbinden erfolgt in der Form. Der Trocknungsschritt kann in und/oder außerhalb der Form stattfinden. Das Abbinden kann bei Umgebungsbedingungen, beispielsweise bei einer Umgebungstemperatur im Bereich von 20 bis 25 °C stattfinden und dabei beispielsweise eine Dauer von 1 Minute bis 6 Stunden benötigen. Soll die Abbindedauer verkürzt werden, kann bei erhöhter Temperatur gearbeitet werden, beispielsweise kann das Abbinden bei 30 bis unter 100 °C Objekttemperatur stattfinden und es ist dann schon beispielsweise innerhalb weniger Sekunden bis 1 Stunde beendet. Das der Entwässerung dienende Trocknen schließt sich ans Abbinden an und benötigt beispielsweise 0,5 bis 6 Stunden bei 80 bis 600 °C Objekttemperatur, wobei es zweckmäßig sein kann, mehrere Temperaturstufen zu durchlaufen. Das Trocknen kann vakuumunterstützt erfolgen.

Die Schritte (1) bis (5) stellen eine Schrittfolge dar. Optional können allerdings Zwischenschritte und/oder Schritt (5) nachgelagerte Folgeschritte stattfinden. Ein Beispiel für einen solchen Zwischenschritt ist die vorerwähnte Spacerapplikation. Ein anderes Beispiel ist es, eine oder die Metallfolien vor Ausführung der Schritte (2) respektive (4) auf der der wässrigen hydraulisch härtbaren Zementzubereitung zugewandten Seite mit einem Haftvermittler zu versehen. So kann es im Übrigen beispielsweise zur Bildung vorerwähnter weiterer optionaler Schichten kommen. Es kann auch sein, dass auf diese Weise in den Schichtenverbund gelangender Haftvermittler teilweise oder vollständig in die Zwischenschicht gelangt, beispielsweise durch Diffusion.

In einer als kontinuierliches Verfahren ausgestalteten Ausführungsform kann das Herstellungsverfahren für einen erfindungsgemäßen Schichtenverbund im Sinne eine Laminierung erfolgen, bei der die Metallschichten mit wässriger hydraulisch härtbarer Zementzubereitung ohne Verwendung einer formatbestimmenden Form laminiert und anschließend als Laminat der hydraulischen Härtung und Trocknung zugeführt werden.

Ein erfindungsgemäßer Schichtenverbund hat entweder schon ein für eine bestimmte Anwendung, beispielsweise ein im Elektronikbereich gewünschtes Format oder er kann wie vorerwähnt mit üblichen Verfahren in kleinere Wunschformate zerteilt werden, beispielsweise durch Laserschneiden oder Zersägen.

Die metallische Oberseite eines erfindungsgemäßen Schichtenverbundes kann mit Verfahren wie im Bereich der Metallkeramiksubstrate üblich bearbeitet und strukturiert werden, beispielsweise können betreffende Anteile der die Oberseite bildenden Metallschicht fotolithographisch maskiert und durch Ätzen entfernt werden.

Wie eingangs schon erwähnt kann ein erfindungsgemäßer Schichtenverbund im Elektronikbereich als Substrat verwendet werden. So kann die die Oberseite bildende Metallschicht einer Verbindung mit Elektronikbauteilen dienen. Die Zwischenschicht(en) aus hydraulisch gehärteter anorganischer Zementzusammensetzung dient/dienen als Isolator zwischen den Metallschichten und sie kann/können als Wärmebrücke dienen, die den thermischen Pfad zur die Unterseite bildenden Metallschicht und einem oder mehreren daran gegebenenfalls angebundenen Kühlkörpern herstellt.

### Ausführungsbeispiele:

Beispiel 1: 7 Gewichtsanteile eines Tonerdezementpulvers mit einer maximalen Teilchengröße von 63 µm (Siebrückstand 5 %), 6 Gewichtsanteile 2-Imidazolidinon, 10 Gewichtsanteile Microsilica mit einer maximalen Teilchengröße von 5 µm, 65 Gewichtsanteile Aluminiumoxidpulver mit einer maximalen Teilchengröße von 100 µm und 12 Gewichtsanteile Wasser wurden zu einer wässrigen Zementzubereitung vermischt. Die wässrige Zementzubereitung wurde mittels eines Pinsels auf eine Seite einer 0,5 mm dicken Kupferfolie (Format 5 cm mal 3 cm) in einer homogenen Schichtstärke von 760 µm appliziert. Anschließend wurde eine zweite identische Kupferfolie deckungsgleich mit der ersten Kupferfolie auf die mit der applizierten Zementzubereitung beschichtete Seite gelegt und für 4 Stunden bei 20°C hydraulisch gehärtet. Anschließend wurde die so geschaffene Sandwichanordnung mit einer Aufheizrate von 1 K/min in einem Ofen auf 90 °C erwärmt und eine Stunde bei dieser Temperatur gehalten. Danach wurde die Temperatur mit einer Aufheizrate von 1K/min auf 160°C erhöht und für eine Stunde gehalten.
Beispiel 2: 5 Gewichtsanteile eines Magnesiumoxidzementpulvers mit einer maximalen Teilchengröße von 50 µm, 6 Gewichtsanteile 2-Imidazolidinon, 11 Gewichtsanteile Microsilica mit einer maximalen Teilchengröße von 5 µm, 65 Gewichtsanteile Aluminiumoxidpulver mit einer maximalen Teilchengröße von 100 µm und 12 Gewichtsanteile Wasser wurden zu einer wässrigen Zementzubereitung vermischt. Die wässrige Zementzubereitung wurde mittels eines Pinsels auf eine Seite einer 0,5 mm dicken Kupferfolie (Format 5 cm mal 3 cm) in einer homogenen Schichtstärke von 760 µm appliziert. Anschließend wurde eine zweite identische Kupferfolie deckungsgleich mit der ersten Kupferfolie auf die mit der applizierten Zementzubereitung beschichtete Seite gelegt und für 4 Stunden bei 20°C hydraulisch gehärtet. Anschließend wurde die so geschaffene Sandwichanordnung mit einer Aufheizrate von 1K/min in einem Ofen auf 90 °C erwärmt und eine Stunde bei dieser Temperatur gehalten. Danach wurde die Temperatur mit einer Aufheizrate von 1K/min auf 160°C erhöht und für eine Stunde gehalten.

## Patentansprüche

1. Schichtenverbund umfassend oder bestehend aus zwei nach außen weisenden Metallschichten mit einer dazwischen befindlichen alternierenden Schichtenabfolge aus n Schichten aus einer hydraulisch gehärteten anorganischen Zementzusammensetzung und n - 1 Metallschichten mit n = 1, 2 oder 3.

2. Schichtenverbund nach Anspruch 1, wobei die Schichtdicke der Metallschichten jeweils im Bereich von 100 bis 1500 µm liegt.

3. Schichtenverbund nach Anspruch 1, wobei die Schichtdicke der Metallschichten mit Ausnahme der die Unterseite bildenden Metallschicht jeweils im Bereich von 100 bis 1500 µm liegt und wobei die Schichtdicke der die Unterseite bildenden Metallschicht im Bereich von > 1500 bis 5000 µm liegt.

4. Schichtenverbund nach einem der vorhergehenden Ansprüche mit einem Flächenmaß im Bereich von 2 bis 700 cm².

5. Schichtenverbund nach einem der vorhergehenden Ansprüche im Rechteckformat.

6. Schichtenverbund nach einem der vorhergehenden Ansprüche entweder direkt als Substrat im Elektronikbereich verwendbar oder ausgestaltet als großflächige Quelle für eine Vielzahl von kleinflächigen direkt als Substrat im Elektronikbereich verwendbaren Schichtenverbunden.

7. Schichtenverbund nach einem der vorhergehenden Ansprüche, wobei die Ränder der Metallschichten nicht über die Ränder der Schicht oder Schichten aus hydraulisch gehärteter anorganischer Zementzusammensetzung hinausragen.

8. Schichtenverbund nach einem der vorhergehenden Ansprüche, wobei die Metallschichten deckungsgleich angeordnet sind.

9. Schichtenverbund nach einem der vorhergehenden Ansprüche, wobei die Metallschichten aus dem gleichen oder aus verschiedenen Metallen bestehen.

10. Schichtenverbund nach einem der vorhergehenden Ansprüche, wobei die Metalle der Metallschichten ausgewählt sind aus der Gruppe bestehend aus Kupfer, Kupferlegierungen, Molybdän, Molybdänlegierungen, Aluminium und Aluminiumlegierungen.

11. Schichtenverbund nach einem der vorhergehenden Ansprüche, wobei n = 2 oder 3 ist und die Schichten aus hydraulisch gehärteter anorganischer Zementzusammensetzung aus jeweils den gleichen oder voneinander verschiedenen hydraulisch gehärteten anorganischen Zementzusammensetzungen bestehen.

12. Schichtenverbund nach einem der vorhergehenden Ansprüche, wobei die mindestens eine hydraulisch gehärtete anorganische Zementzusammensetzung aus einem hydraulisch gehärteten anorganischen Zement besteht oder neben dem eigentlichen hydraulisch gehärteten anorganischen Zement einen oder mehrere weitere Bestandteile in einem Gesamtmengenanteil von 0,5 bis 98 Gew.-% umfasst.

13. Schichtenverbund nach Anspruch 12, wobei der hydraulisch gehärtete Zement durch hydraulische Härtung eines hydraulisch härtbaren anorganischen aus der aus Portlandzement, Tonerdezement, Magnesiumoxidzement und Phosphatzement bestehenden Gruppe ausgewählten Zements gebildet worden ist.

14. Schichtenverbund nach einem der vorhergehenden Ansprüche, wobei der oder die weiteren Bestandteile ausgewählt sind aus der Gruppe bestehend aus Füllstoffen, Fasern, Fließverbesserern, Abbindeverzögerern, Entschäumern, wassermischbaren organischen Lösemitteln, Hydrophobisierungsmitteln, Oberflächenspannung beeinflussenden Additiven, Benetzungsmitteln und Haftvermittlern.

15. Kontinuierlich oder diskontinuierlich ausgestaltetes Verfahren zur Herstellung eines Schichtenverbundes nach einem der vorhergehenden Ansprüche umfassend die Applikation wässriger hydraulisch härtbarer anorganischer Zementzubereitung in jeweils homogener Schichtdicke zwischen Metallfolien, gefolgt von hydraulischem Härten und Trocknen der applizierten wässrigen hydraulisch härtbaren anorganischen Zementzubereitung.

16. Verwendung eines Schichtenverbundes nach einem der Ansprüche 1 bis 14 oder hergestellt nach Anspruch 15 als Substrat im Elektronikbereich.
